# EUROPÄISCHE PATENTSCHRIFT

(11) **EP 3 399 185 B1**
(45) Veröffentlichungstag und Bekanntmachung des Hinweises auf die Patenterteilung: **07.12.2022**
(21) Anmeldenummer: 18170489.1
(22) Anmeldetag: 03.05.2018
(51) Int. Cl.: F03D 80/30

(54) **EINHAUSUNG FÜR EINE GONDEL EINER WINDENERGIEANLAGE**
HOUSING FOR A NACELLE OF A WIND TURBINE
ENCEINTE POUR UNE NACELLE D'UNE ÉOLIENNE

(30) Priorität: 04.05.2017 DE 102017004291
(43) Veröffentlichungstag der Anmeldung: 07.11.2018
(73) Patentinhaber: Siemens Gamesa Renewable Energy Service GmbH, 20097 Hamburg (DE)
(72) Erfinder: Lieckfeldt, Nils, 24109 Melsdorf (DE)
(74) Vertreter: Glawe, Delfs, Moll

(56) Entgegenhaltungen:
- EP-A1- 3 002 456
- DE-A1-102008 027 498
- US-A1- 2012 045 321

## Beschreibung

Die Erfindung betrifft eine Einhausung für eine Gondel einer Windenergieanlage. Die Einhausung umfasst ein Paneel, das mit einer Unterkonstruktion verbunden ist.

Bei einer Windenergieanlage ist üblicherweise eine Gondel drehbar auf einem Turm gelagert. Die Gondel trägt einen Rotor, der durch den Wind in Drehung versetzt wird und einen Generator antreibt, um elektrische Energie zu erzeugen. Durch Rotation der Gondel relativ zu dem Turm kann der Rotor in Windrichtung ausgerichtet werden.

In der Gondel sind mehrere Komponenten angeordnet, wie beispielsweise Rotorwelle, Getriebe, Generator, Umrichter, Steuereinrichtungen usw. Eine Einhausung schützt die in der Gondel angeordneten Komponenten vor Umwelteinflüssen.

Die Einhausung kann aus einer Mehrzahl von Paneelen zusammengesetzt sein, EP 2 636 898 A1, WO 2015/155131 A1. Die Paneele können entlang ihrer Kanten miteinander bzw. mit der Unterkonstruktion verbunden sein, so dass in der Summe eine im Wesentlichen geschlossene Hülle um die Gondel herum entsteht. Damit die Verbindung zu der Unterkonstruktion und zu benachbarten Paneelen gut passt, müssen die Paneele mit einer hinreichenden Präzision gefertigt werden. Angesichts der Großflächigkeit der Paneele sowie der Fertigungstoleranzen im Stahl- und GFK-Bau ist dies nicht ganz einfach, weswegen häufig eine manuelle Nacharbeit erforderlich ist. Dokument DE 10 2008 027 498 A1 stellt ein Gehäuse für eine Gondel einer Windenergieanlage mit einer Tragestruktur aus Rohren oder Streben und an dieser Tragestruktur festgelegten Verkleidungssegmenten vor, wobei die Verkleidungssegmente eine abdeckende Oberfläche aus Kunststoff aufweisen und selbsttragend ausgeführt sind.

Der Erfindung liegt die Aufgabe zugrunde, eine Einhausung für eine Gondel einer Windenergieanlage vorzustellen, die mit vermindertem Aufwand montiert werden kann. Ausgehend vom genannten Stand Technik wird die Aufgabe gelöst mit den Merkmalen des Anspruchs 1. Vorteilhafte Ausführungsformen sind in den Unteransprüchen angegeben.

Bei dem erfindungsgemäßen Paneel erstreckt sich eine gedachte Gerade über das Paneel, die parallel zu einer Kante des Paneels ausgerichtet ist. Durch die gedachte Gerade wird ein die Kante umfassender erster Teilabschnitt des Paneels definiert. Der erste Teilabschnitt liegt an der Unterkonstruktion an. Der erste Teilabschnitt wird durch ein in einer Zugrichtung wirkendes Zugelement gegen die Unterkonstruktion gehalten. In einer die Zugrichtung schneidenden Richtung ist der erste Teilabschnitt relativ zu der Unterkonstruktion verschiebbar.

Indem der erste Teilabschnitt lediglich durch ein Zugelement gegen die Unterkonstruktion gehalten wird, ist es nicht erforderlich, den ersten Teilabschnitt des Paneels und die Unterkonstruktion mit hoher Präzision relativ zueinander zu positionieren. Vielmehr kann der erste Teilabschnitt solange relativ auf zu der Unterkonstruktion verschoben werden, bis die in einem zweiten Teilabschnitt des Paneels angeordneten Befestigungsmittel gut in Eingriff gebracht werden können. Es ist demnach eine einfache Montage des Paneels möglich, auch wenn weder das Paneel noch die Unterkonstruktion in höchster Präzision gefertigt wurden.

Wenn das Paneel eine an ein Rechteck angenäherte Form hat, kann die gedachte Gerade zwei einander gegenüberliegende Kanten des Rechtecks schneiden. Die Ausrichtung der gedachten Geraden bezieht sich dann auf eine dritte Kante, zu der sich die gedachte Gerade im Wesentlichen parallel erstrecken kann. Der durch die gedachte Gerade definierte erste Teilabschnitt des Paneels kann wenigstens 30 %, vorzugsweise wenigstens 50 %, weiter vorzugsweise wenigstens 80 % der Fläche des Paneels ausmachen.

In dem zweiten Teilabschnitt des Paneels, der auf der anderen Seite der gedachten Geraden angeordnet ist, kann das Paneel über Festlager mit der Unterkonstruktion verbunden sein. Im Bereich eines Festlagers kann das Paneel nicht relativ zu der Unterkonstruktion verschoben werden. Die Befestigung kann eine oder mehrere in dem Paneel ausgebildete Bohrungen umfassen, die mit entsprechenden Bohrungen in der Unterkonstruktion fluchten. Die Verbindung kann beispielsweise durch Schraubbolzen hergestellt werden, die sich durch die fluchtenden Bohrungen hindurch erstrecken. Die Bohrungen in dem Paneel und/oder die Bohrungen in der Unterkonstruktion können in einer oder mehreren Richtungen einen größeren Durchmesser haben als die hindurchgeführten Bolzen, so dass der zweite Teilabschnitt des Paneels relativ zu der Unterkonstruktion justiert werden kann. Bei einer solchen Justierung müssen lediglich die in dem zweiten Teilabschnitt angeordneten Befestigungselemente beachtet werden. Der erste Teilabschnitt des Paneels kann in dem für die Justierung erforderlichen Umfang frei relativ zu der Unterkonstruktion verschoben werden.

Das Paneel kann für die starre Befestigung an der Unterkonstruktion eine Mehrzahl von Bohrungen umfassen, die sich entlang einer Kante des Paneels erstrecken. Diese Kante des zweiten Teilabschnitts kann gegenüber der Kante des ersten Teilabschnitts angeordnet sein, zu der die gedachte Gerade ausgerichtet ist.

Das Zugelement kann sich zwischen dem ersten Teilabschnitt des Paneels und einem Verankerungspunkt der Unterkonstruktion erstrecken. Damit eine Verschiebung des ersten Teilabschnitts relativ zu der Unterkonstruktion sich nicht zu stark auf die Zugrichtung des Zugelements auswirkt, ist es von Vorteil, wenn das Zugelement eine Länge von mindestens 10 cm, vorzugsweise mindestens 20 cm hat. Das Zugelement kann als Zugstange ausgebildet sein, deren Länge beispielsweise über ein Gewinde einstellbar sein kann. Möglich ist auch die Verwendung eines Zugseils oder einer Zugfeder. Die Einhausung kann eine Mehrzahl von Zugelementen umfassen, die sich zwischen dem ersten Teilabschnitt und der Unterkonstruktion erstrecken, beispielsweise zwei Zugelemente, drei Zugelemente oder vier Zugelemente.

Das Paneel kann in dem Bereich, in dem das Zugelement an dem Paneel angreift, versteift sein. Beispielsweise kann ein Versteifungsprofil auf einer Innenseite des Paneels angeordnet sein, an dem das Zugelement angreift. Das Versteifungsprofil kann sich über die Länge des Paneels erstrecken. In dem Bereich, in dem eine starre Verbindung zur Unterkonstruktion besteht, kann das Paneel zum Zwecke der weiteren Versteifung ein stehendes Profil aufweisen, das gegenüber der Fläche des Paneels abgewinkelt ist. Das stehende Profil kann beispielsweise als Flansch ausgebildet sein, durch den Schrauben hindurchgeführt sind, mit denen das Paneel an der Unterkonstruktion befestigt ist.

Eine Kante des Paneels kann mit einem weiteren Paneel überlappen. Insbesondere kann die Kante im ersten Teilabschnitt des Paneels, zu der die gedachte Gerade ausgerichtet ist, mit einem anderen Paneel überlappen. Liegt der erste Teilabschnitt an dem anderen Paneel an und ist das andere Paneel seinerseits durch die Unterkonstruktion getragen, so liegt der erste Teilabschnitt im Sinne der Erfindung an der Unterkonstruktion an. Eine Kante im zweiten Teilabschnitt des Paneels kann zusätzlich oder alternativ dazu ebenfalls mit einem weiteren Paneel überlappen

Die Unterkonstruktion kann von einem Maschinenträger der Gondel getragen werden. Maschinenträger bezeichnet eine Einrichtung, auf der beispielsweise die Rotorwelle, das Getriebe oder der Generator gelagert sind. Die Unterkonstruktion kann Streben umfassen. An den Streben können Befestigungspunkte ausgebildet sein, an denen das Paneel befestigt ist oder an denen das Paneel aufliegt. Die Streben können sich im Wesentlichen parallel zu dem Paneel erstrecken.

Das Paneel kann ein Seitenpaneel sein, also ein Paneel, das eine Seitenwand der Einhausung bildet. Der erste Teilabschnitt kann einen unteren Abschnitt des Seitenpaneels bilden. Der zweite Teilabschnitt kann einen oberen Abschnitt des Seitenpaneels bilden. Die gedachte Gerade kann sich im Wesentlichen horizontal und parallel zu einer Längsachse der Gondel erstrecken.

Nach oben hin kann ein Dachpaneel an das Seitenpaneel anschließen. Das Dachpaneel kann einen Seitenabschnitt umfassen, der mit dem oberen Abschnitt des Seitenpaneels überlappt. Die Überlappung kann regendicht ausgebildet sein, so dass von dem Dachpaneel kommendes Regenwasser nicht am Übergang zwischen dem Dachpaneel und dem Seitenpaneel in den Innenraum der Einhausung eindringen kann. Zwischen dem Seitenabschnitt des Dachpaneels und dem oberen Abschnitt des Seitenpaneels kann ein Spalt ausgebildet sein, so dass das Dachpaneel und das Seitenpaneel sich in diesem Bereich relativ zueinander bewegen können.

Das Dachpaneel kann sich über die gesamte Breite der Einhausung erstrecken und an seinem anderen Ende an ein auf der gegenüberliegenden Seite angeordnetes Seitenpaneel anschließen.

Das Dachpaneel kann über eines oder mehrere Lager an der Unterkonstruktion befestigt sein. Eine durch die Lager des Dachpaneels gebildete Lagerreihe kann sich im Wesentlichen parallel zu einer Lagerreihe des Seitenpaneels erstrecken. Die Lager des Dachpaneels können Festlager und Gleitlager umfassen. Umfasst das Dachpaneel beispielsweise drei zu einem Seitenpaneel benachbarte Lager, so können zwei Lager als Festlager und ein Lager als Gleitlager ausgebildet sein. Das Gleitlager kann das vorderste Lager sein, also das am nächsten zum Rotor angeordnete Lager.

Das Dachpaneel kann aus einer Mehrzahl von Paneelteilen zusammengesetzt sein. Ein Dachpaneel kann beispielsweise zwei, drei oder vier Paneelteile umfassen. Die Paneelteile können sich über die gesamte Breite der Einhausung erstrecken. Die Paneelteile können in Längsrichtung hintereinander angeordnet sein. Zwischen zwei benachbarten Paneelteilen kann ein Flansch ausgebildet sein. In dem Flansch können Bohrungen ausgebildet sein, so dass die Paneelteile beispielsweise mit Schrauben verbunden werden können. Eines oder mehrere Lager, mit denen das Dachpaneel gegenüber der Unterkonstruktion gelagert ist, können in einem Übergangsbereich zwischen einem ersten Paneelteile und einem zweiten Paneelteil angeordnet sein. Die Lager können als Auflager gestaltet sein.

Das Dachpaneel kann an seinem hinteren Ende, das von dem Rotor abgewandt ist, durch eine Zugeinrichtung gehalten ist, die einen Zug nach vorne ausübt. Das Zugelement kann zugleich als Rezeptor eines Blitzableiters ausgebildet sein. Der Blitzableiter der Windenergieanlage kann sich von einem Rezeptor über eine Strecke innerhalb der Gondel und eine Strecke innerhalb des Turms bis zu einem Erdungspunkt erstrecken.

Ein Dachpaneel kann mit technischen Einrichtungen ausgestattet sein, wie beispielsweise Messgeräten oder Sensoren, die nach oben über das Dachpaneel hinausragen. Bei einem aus mehreren Paneelteilen zusammengesetzten Dachpaneel können diese technischen Einrichtungen allesamt in demselben Paneelteil untergebracht sein. Eine nach oben ragende Einrichtung kann als Rezeptor eines Blitzableiters ausgebildet sein.

Nach unten hin kann ein Bodenpaneel an das Seitenpaneel anschließen. Der erste Teilabschnitt des Seitenpaneels kann mit dem Bodenpaneel überlappen. Die Überlappung kann regendicht ausgebildet sein, so dass an dem Seitenpaneel herunterlaufendes Wasser am Übergang zum Bodenpaneel nicht in den Innenraum der Einhausung eindringen kann. Der erste Teilabschnitt des Seitenpaneels kann verschiebbar relativ zu dem Bodenpaneel gelagert sein. Wenn der erste Teilabschnitt des Seitenpaneels über ein Zugelement nach innen gezogen wird, kann eine Außenfläche des Bodenpaneels ein Widerlager für den Zug bilden.

Das Bodenpaneel kann über Festlager mit der Unterkonstruktion verbunden sein. Die Festlager können in einer Reihe angeordnet sein, die sich parallel zu dem unteren Ende des Seitenpaneels erstreckt. Das Bodenpaneel kann sich über die gesamte Breite der Einhausung erstrecken und mit seinem anderen Ende an ein auf der gegenüberliegenden Seite der Einhausung angrenzendes Seitenpaneel anschließen. Mit einem Dachpaneel, zwei Seitenpaneelen und einem Bodenpaneel kann eine Hülle gebildet werden, die sich rings um den Innenraum der Gondel herum erstreckt. Die Einhausung kann ein erstes Seitenpaneel und ein zweites Seitenpaneel umfassen, die in Längsrichtung hintereinander angeordnet sind. Das erste Seitenpaneel und das zweite Seitenpaneel können in Längsrichtung verschiebbar relativ zueinander sein. Das erste Seitenpaneel kann mit einem ersten Abschnitt der Unterkonstruktion verbunden sein, das zweite Seitenpaneel kann mit einem zweiten Abschnitt der Unterkonstruktion verbunden sein. Das erste Seitenpaneel und das zweite Seitenpaneel können unter elastischer Verformung der Unterkonstruktion relativ zueinander verschiebbar sein. Verformt sich die Gondel im Betrieb durch Biegung oder Torsion, so werden Längsverschiebungen zwischen den Seitenpaneelen relativ zueinander zugelassen und somit einer Zwangsverformung der Paneele und den einhergehend auftretenden Lagerreaktionen entgegengewirkt. Das erste Seitenpaneel kann in Längsrichtung mit dem zweiten Seitenpaneel überlappen. In der Überlappung ist vorzugsweise das vordere Seitenpaneel außen und das hintere Seitenpaneel innen angeordnet. Ein hinterer Abschluss des vorderen Seitenpaneels kann relativ zur Vertikalen geneigt sein. Ein oberer Abschnitt des vorderen Seitenpaneels kann sich weiter nach hinten erstrecken als ein unterer Abschnitt des vorderen Seitenpaneels.

Die Einhausung kann ein erstes Dachpaneel und ein zweites Dachpaneel umfassen. Das erste Dachpaneel kann mit einem ersten Abschnitt der Unterkonstruktion verbunden sein, das zweite Dachpaneel kann mit einem zweiten Abschnitt der Unterkonstruktion verbunden sein. Das erste Dachpaneel und das zweite Dachpaneel können unter elastischer Verformung der Unterkonstruktion relativ zueinander verschiebbar sein. Verwindungen im Betrieb der Gondel können so aufgenommen werden, ohne dass Kräfte zwischen den Dachpaneelen übertragen werden. Eine solche Einhausung hat eigenständigen erfinderischen Gehalt, unabhängig davon, wie die Verbindung zwischen den Paneelen und der Unterkonstruktion gestaltet ist.

Die beiden Abschnitte der Unterkonstruktion können mit dem Maschinenträger verbunden sein, so dass insoweit eine mechanische Verbindung zwischen den beiden Abschnitten der Unterkonstruktion besteht. Für eine voneinander unabhängige elastische Verformung der beiden Abschnitte der Unterkonstruktion ist es von Vorteil, wenn die Unterkonstruktion ausgehend von dem Maschinenträger einen langen Hebelarm bildet, in dem es keine mechanische Kopplung zwischen den Abschnitten der Unterkonstruktion gibt. Der Hebelarm kann sich beispielsweise über mindestens 10 %, vorzugsweise mindestens 20 %, weiter vorzugsweise mindestens 50 % der Höhe erstrecken, die die Gondel in dem betreffenden Bereich hat.

Das erste Dachpaneel und das zweite Dachpaneel können in Längsrichtung hintereinander angeordnet sein. Das erste Dachpaneel und das zweite Dachpaneel können in Längsrichtung verschiebbar relativ zueinander sein.

Das erste Dachpaneel kann Element eines dem Rotor zugewandten Vorderteils, das zweite Dachpaneel kann Element eines Hinterteils der Einhausung sein. Das Vorderteil und/oder das Hinterteil können eines oder mehrere Seitenpaneele umfassen. Insbesondere können das Vorderteil und/oder das Hinterteil sich in Umfangsrichtung rund um den Innenraum der Gondel herum erstrecken und jeweils ein Dachpaneel, zwei Seitenpaneele und ein Bodenpaneel umfassen.

Am Übergang zwischen dem Dachpaneel des Vorderteils und dem Dachpaneel des Hinterteils kann ein Zwischenpaneel angeordnet sein. Das Zwischenpaneel kann eine geringere Höhe haben als das Dachpaneel des Vorderteils und das Dachpaneel des Hinterteils. Das Zwischenpaneel kann eine Wasserrinne aufweisen, so dass von einem der Dachpaneele tropfendes Wasser abgeleitet wird. Die Regenrinne kann sich in Querrichtung erstrecken, so dass das Wasser zur Seite fließt. Das Dachpaneel des Vorderteils und/oder das Dachpaneel des Hinterteils können in Längsrichtung mit dem Zwischenpaneel überlappen. Das Dachpaneel des Hinterteils kann eine geringere Höhe haben als das Dachpaneel des Vorderteils.

Die Erfindung betrifft außerdem eine Gondel, die mit einer solchen Einhausung ausgestattet ist. Die Erfindung betrifft ferner eine Windenergieanlage mit einem Turm, auf dem eine solche Gondel drehbar gelagert ist. Die Gondel trägt einen Rotor, der über eine Rotorwelle einen Generator antreibt.

Die Erfindung wird nachfolgend unter Bezugnahme auf die beigefügten Zeichnungen anhand vorteilhafter Ausführungsformen beispielhaft beschrieben. Es zeigen:
Fig. 1: eine schematische Darstellung einer erfindungsgemäßen Windenergieanlage;
Fig. 2: eine perspektivische Darstellung einer erfindungsgemäßen Einhausung;
Fig. 3: einen Maschinenträger und eine Unterkonstruktion einer erfindungsgemäßen Gondel;
Fig. 4: eine Seitenansicht der Einhausung gemäß Fig. 2;
Fig. 5: einen Querschnitt durch den hinteren Teil einer erfindungsgemäßen Einhausung;
Fig. 6: ein Detail aus Fig. 5 in vergrößerter Darstellung;
Fig. 7: ein Detail aus Fig. 5 in vergrößerter Darstellung;
Fig. 8: einen horizontalen Längsschnitt durch eine erfindungsgemäße Einhausung;
Fig. 9: ein Detail aus Fig. 8 in vergrößerter Darstellung;

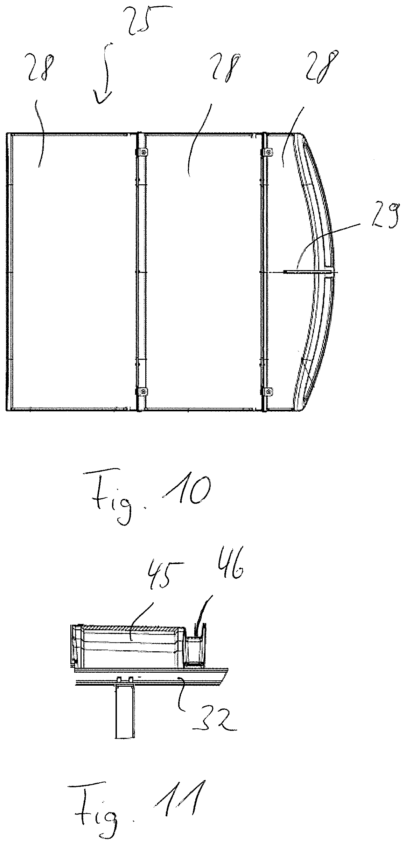

Fig. 10: eine Ansicht von oben auf ein erfindungsgemäßes Dachpaneel;
Fig. 11: eine Seitenansicht eines erfindungsgemäßen Zwischenpaneels;
Fig. 12: ein Seitenpaneel einer erfindungsgemäßen Einhausung.

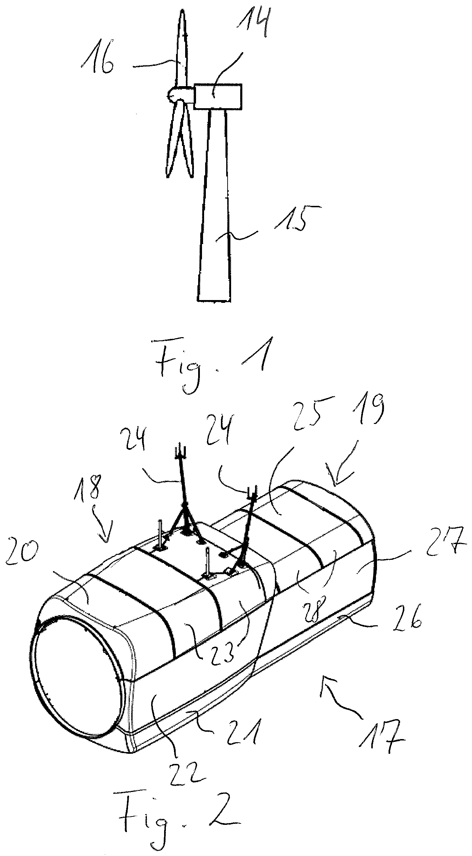

Bei einer in Fig. 1 gezeigten erfindungsgemäßen Windenergieanlage ist eine Gondel 14 drehbar auf einem Turm 15 gelagert. Ein Rotor 16 wird durch den Wind in Drehung versetzt und treibt über ein Getriebe einen Generator an. Der Generator erzeugt elektrischen Strom, der in ein Energieverteilungsnetz eingespeist wird.

Die Gondel 14 hat eine in Fig. 2 gezeigte Einhausung 17, die den Innenraum der Gondel 14 umgibt und die darin angeordneten Komponenten vor Wettereinflüssen schützt. Die Einhausung 17 ist zusammengesetzt aus einem Vorderteil 18 und einem Hinterteil 19. Das Vorderteil 18 umfasst ein Dachpaneel 20, ein Bodenpaneel 21 sowie zwei Seitenpaneele 22, von denen in Fig. 2 nur eines sichtbar ist. Das Dachpaneel 18 ist aus vier in Längsrichtung hintereinander angeordneten Paneelteilen 23 zusammengesetzt. Ein erstes Paneelteil 23 ist vorne angeordnet und grenzt an eine Öffnung der Gondel 14 an, die die Rotornabe umgibt. Ein zweites und ein drittes Paneelteil 23 schließen sich in Längsrichtung an. Den hinteren Abschluss des Dachpaneels 18 bildet ein viertes Paneelteil 23. die vier Paneelteile 23 sind entlang der in Fig. 2 gezeigten Fugen mit Flanschen versehen und miteinander verschraubt, so dass das Dachpaneel 18 als eine Einheit auf die Gondel 14 aufgesetzt werden kann.

Das dritte Paneelteil 23 ist mit einigen technischen Einrichtungen versehen, die nach oben über das Dachpaneel 18 hinausragen. Zwei nach oben ragende Masten bilden Rezeptoren 24 eines Blitzableiters. Ein in den Rezeptoren 24 einschlagender Blitz wird über eine Leiterstrecke in der Gondel und in dem Turm zur Erde abgeleitet.

Das Hinterteil 19 der Einhausung umfasst ein Dachpaneel 25, ein Bodenpaneel 26 sowie zwei Seitenpaneele 27, von denen in Fig. 2 nur eines sichtbar ist. Das Dachpaneel 25 ist aus drei hintereinander angeordneten Paneelteilen 28 zusammengesetzt, die entlang der in Fig. 2 gezeigten Fugen in miteinander verschraubt sind.

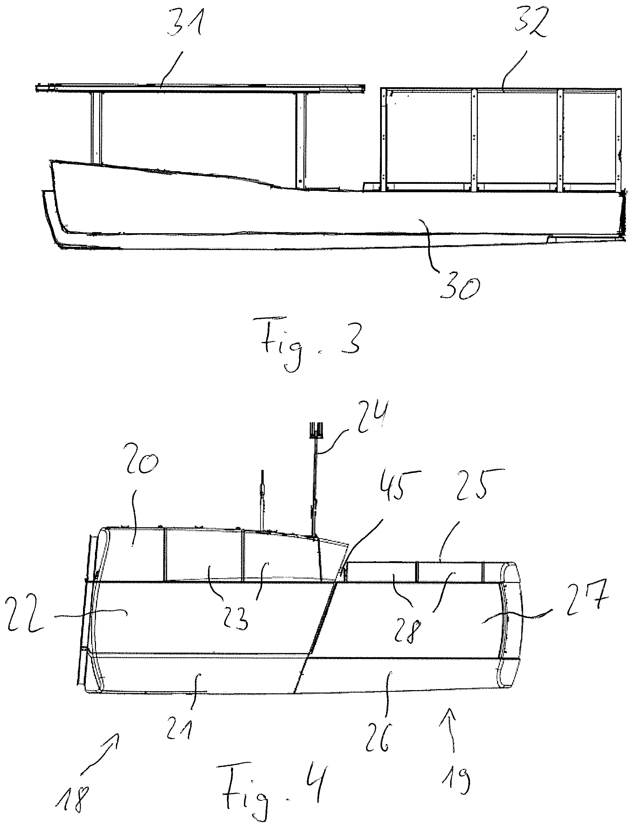

Gemäß Fig. 3 ist in der Gondel 14 ein Maschinenträger 30 angeordnet, der eine tragende Struktur für die in der Gondel 14 angeordneten Komponenten bildet. Zu diesen Komponenten gehören die Rotorwelle, dass Getriebe sowie der Generator. Der Maschinenträger 30 bildet außerdem eine tragende Struktur für einen vorderen Abschnitt 31 einer Unterkonstruktion sowie einen hinteren Abschnitt 32 einer Unterkonstruktion. Die Abschnitte 31, 32 der Unterkonstruktion sind über den Maschinenträger 30 miteinander verbunden, im Übrigen aber mechanisch voneinander entkoppelt.

Der vordere Abschnitt 31 der Unterkonstruktion trägt das Vorderteil 18 der Einhausung 17. Der hintere Abschnitt 32 der Unterkonstruktion trägt das Hinterteil 19 der Einhausung 17. Das Vorderteil 18 und das Hinterteil 19 der Einhausung 17 sind nicht miteinander verbunden, sondern können in Längsrichtung relativ zueinander verschoben werden. Dabei ist das Hinterteil 19 von außen von dem Vorderteil 18 umgeben. Da das Vorderteil in Windrichtung ausgerichtet ist, gibt es zwischen dem Vorderteil 18 und dem Hinterteil 19 keinen Spalt, in den der Wind direkt eindringen kann.

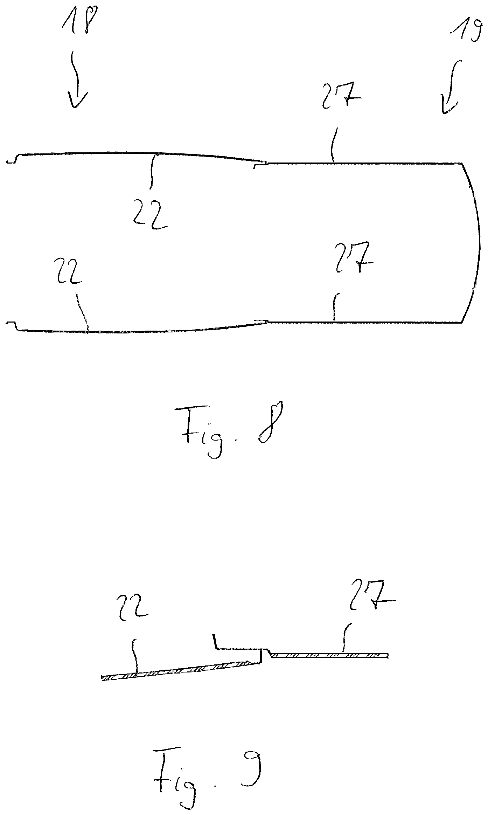

Gemäß Fig. 8 überlappt das Seitenpaneel 22 des Vorderteils 18 in Längsrichtung mit dem Seitenpaneel 27 des Hinterteils 19. Die Überlappung hat gemäß Fig. 4 eine Neigung relativ zur Vertikalen und ist gemäß Fig. 9 so gestaltet, dass Regenwasser nach unten abgeleitet wird und nicht in den Innenraum der Gondel 14 eindringt.

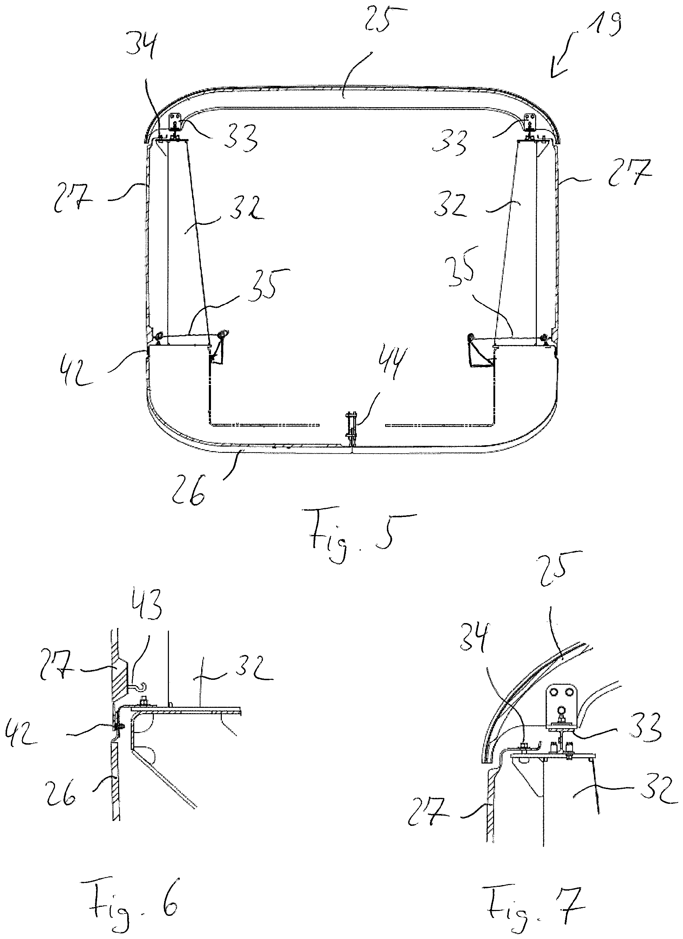

In Fig. 5 ist ein Querschnitt durch das Hinterteil 19 der Einhausung 17 gezeigt. Die Unterkonstruktion 32 stützt über Winkelbleche das Dachpaneel 25 ab und bildet damit Festlager 33 für das Dachpaneel 25. Das Dachpaneel ist im Bereich der Fugen zwischen den Paneelteilen 28 mit Festlagern 33 an der Unterkonstruktion 32 abgestützt. Das vordere Ende des Dachpaneels 25 ist zusätzlich mit einem in Längsrichtung und Querrichtung verschiebbaren Gleitlager gegenüber der Unterkonstruktion 32 abgestützt. Das hintere Ende des Dachpaneels 25 ist über eine nach vorne wirkende Zugeinrichtung 29 an der Unterkonstruktion 32 gehalten. Ein äußeres Ende der Zugeinrichtung 29 bildet zugleich einen Rezeptor für einen Blitzableiter.

Die Seitenpaneele 27 sind mit der Unterkonstruktion 32 über Schraubverbindungen 34 verbunden, die benachbart zu den Festlagern 33 angeordnet sind. Das untere Ende der Seitenpaneele 27 wird durch eine Zugstange 35 nach innen gezogen und damit gegen die Unterkonstruktion 32 gehalten. In Fig. 6 ist ein Haken 43 gezeigt, an dem die Zugstange eingehakt wird. In Längsrichtung ist das untere Ende der Seitenpaneele 27 relativ zu der Unterkonstruktion 32 verschiebbar. Eine Schraubverbindung oder sonstige starre Verbindung zu der Unterkonstruktion 32 gibt es am unteren Ende der Seitenpaneele 27 nicht. Die einzige starre Verbindung zwischen den Seitenpaneelen 27 und der Unterkonstruktion 32 wird durch die Schrauben 34 gebildet.

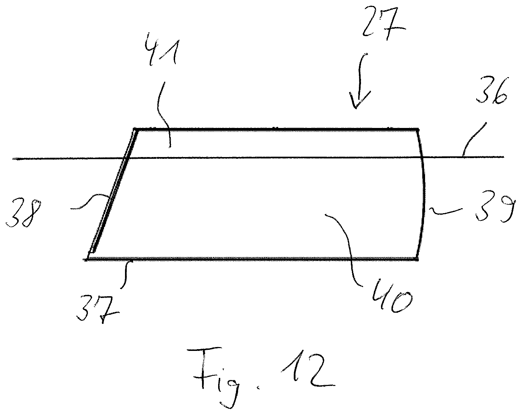

Gemäß Fig. 12 gibt es eine gedachte Gerade, die zu einer unteren Kante 37 des Seitenpaneels 27 ausgerichtet ist und die die beiden seitlichen Kanten 38, 39 des Seitenpaneels 27 schneidet. Der Bereich unterhalb der gedachten Geraden 36 wird als erster Teilabschnitt 40 des Seitenpaneels 27 bezeichnet. Der Bereich oberhalb der gedachten Geraden wird als zweiter Teilabschnitt 41 des Seitenpaneels 27 bezeichnet. In Fig. 12 macht der erste Teilabschnitt 40 deutlich mehr als die Hälfte der Fläche des Seitenpaneels 27 aus. Im zweiten Teilabschnitt 41 gibt es eine Schraubverbindung 34 zwischen dem Seitenpaneel 27 und der Unterkonstruktion 32. Im ersten Teilabschnitt 40 liegt das Seitenpaneel 27 mit seiner unteren Kante an der Unterkonstruktion 32 an und wird durch Zugstangen 35 in dieser Position gehalten. Andere Verbindungen zwischen dem Seitenpaneel 27 und der Unterkonstruktion 32 gibt es in dem ersten Teilabschnitt 40 des Seitenpaneels 27 nicht.

Das Bodenpaneel 26 ist über Schraubverbindungen 42 mit der Unterkonstruktion 32 verbunden. In der Mitte ist das Bodenpaneel 26 zusätzlich mit einem Aufhänger 44 abgehängt. Zwischen dem Dachpaneel 25 und dem Seitenpaneel 27 sowie zwischen dem Seitenpaneel 27 und dem Bodenpaneel 26 gibt es jeweils eine Überlappung, so dass kein Regenwasser eindringen kann.

Am Übergang zwischen dem hinteren Ende des vorderen Dachpaneels 20 und dem vorderen Ende des hinteren Dachpaneels 25 ist ein Zwischenpaneel 45 angeordnet. Das Zwischenpaneel 45 ist mit dem hinteren Teil 32 der Unterkonstruktion verbunden und hat eine geringere Höhe als die Dachpaneele 20, 25. beide Dachpaneele 20, 25 überlappen mit dem Zwischenpaneel 45. Herabtropfendes Wasser wird über eine Regenrinne 46 nach außen abgeleitet.

## Patentansprüche

1. Einhausung für eine Gondel (14) einer Windenergieanlage, bei der ein Paneel (22, 27) mit einer Unterkonstruktion (31, 32) verbunden ist, mit einer gedachten Geraden (36), die sich über das Paneel (22, 27) erstreckt und zu einer Kante (37) des Paneels (22, 27) ausgerichtet ist, wobei durch die gedachte Gerade (36) ein die Kante (37) umfassender erster Teilabschnitt (40) des Paneels (22, 27) definiert wird und wobei der erste Teilabschnitt (40) an der Unterkonstruktion (31, 32) anliegt, wobei der erste Teilabschnitt (40) durch ein in einer Zugrichtung wirkendes Zugelement (35) gegen die Unterkonstruktion (31, 32) gehalten wird und wobei der erste Teilabschnitt (40) in einer die Zugrichtung schneidenden Richtung relativ zu der Unterkonstruktion (31, 32) verschiebbar ist, **dadurch gekennzeichnet, dass** sich eine Verschiebung des ersten Teilabschnitts (40) relativ zu der Unterkonstruktion (31, 32) auf die Zugrichtung des Zugelements (35) auswirkt.

2. Einhausung nach Anspruch 1, **dadurch gekennzeichnet, dass** ein zweiter Teilabschnitt (41) des Paneels (22, 27), der auf der anderen Seite der gedachten Geraden (36) angeordnet ist, über Festlager (33) mit der Unterkonstruktion (31, 32) verbunden ist.

3. Einhausung nach Anspruch 2, **dadurch gekennzeichnet, dass** das Paneel (22, 27) im zweiten Teilabschnitt (41) eine Mehrzahl von Bohrungen umfasst, die sich entlang einer Kante des Paneels (22, 27) erstrecken und über die das Paneel (22, 27) mit der Unterkonstruktion (31, 32) verbunden ist.

4. Einhausung nach einem der Ansprüche 1 bis 3, **dadurch gekennzeichnet, dass** das Zugelement (35) sich zwischen dem ersten Teilabschnitt (40) des Paneels (22, 27) und einem Verankerungspunkt der Unterkonstruktion (31, 32) erstreckt.

5. Einhausung nach einem der Ansprüche 1 bis 4, **dadurch gekennzeichnet, dass** das Paneel ein Seitenpaneel (22, 27) der Einhausung (17) ist.

6. Einhausung nach Anspruch 5, **dadurch gekennzeichnet, dass** der erste Teilabschnitt (40) den unteren Abschnitt des Seitenpaneels (22, 27) bildet.

7. Einhausung nach Anspruch 5 oder 6, **dadurch gekennzeichnet, dass** ein Dachpaneel (20, 25) an das Seitenpaneel (22, 27) anschließt, wobei das Dachpaneel (20, 25) und das Seitenpaneel (22, 27) nicht direkt, sondern nur über die Unterkonstruktion (31, 32) miteinander verbunden sind.

8. Einhausung nach einem der Ansprüche 5 bis 7, **dadurch gekennzeichnet, dass** das Dachpaneel (20, 25) an seinem hinteren Ende durch eine Zugeinrichtung (29) gehalten ist, die einen Zug nach vorne ausübt.

9. Einhausung nach Anspruch 8, **dadurch gekennzeichnet, dass** die Zugeinrichtung (29) einen Rezeptor eines Blitzableiters umfasst.

10. Einhausung nach einem der Ansprüche 5 bis 9, **dadurch gekennzeichnet, dass** ein Bodenpaneel (26) an das Seitenpaneel (22, 27) anschließt und dass der erste Teilabschnitt (40) des Seitenpaneels (22, 27) in Längsrichtung relativ zu dem Bodenpaneel (26) verschiebbar ist.

11. Einhausung nach einem der Ansprüche 5 bis 10, **gekennzeichnet durch** ein erstes Seitenpaneel (22) und ein zweites Seitenpaneel (27), die in Längsrichtung hintereinander angeordnet sind und die in Längsrichtung relativ zueinander verschiebbar sind.

12. Einhausung nach Anspruch 11, **dadurch gekennzeichnet, dass** das erste Seitenpaneel (22) mit einem ersten Abschnitt (31) der Unterkonstruktion verbunden ist, dass das zweite Seitenpaneel (27) mit einem zweiten Abschnitt (32) der Unterkonstruktion verbunden ist, wobei die unter elastischer Verformung der Unterkonstruktion (31, 32) relativ zueinander verschiebbar sind.

13. Einhausung nach einem der Ansprüche 1 bis 12, **gekennzeichnet durch** ein erstes Dachpaneel (20) und ein zweites Dachpaneel (25), wobei das erste Dachpaneel (20) mit einem ersten Abschnitt (31) der Unterkonstruktion verbunden ist, wobei das zweite Dachpaneel (25) mit einem zweiten Abschnitt (32) der Unterkonstruktion verbunden ist, und wobei die Dachpaneele (20, 25) unter elastischer Verformung der Unterkonstruktion (31, 32) relativ zueinander verschiebbar sind.

14. Einhausung nach einem der Ansprüche 1 bis 13, **gekennzeichnet durch** ein zwischen einem ersten Dachpaneel (20) und einem zweiten Dachpaneel (25) angeordnetes Zwischenpaneel (45), das mit dem ersten Dachpaneel (20) und dem zweiten Dachpaneel (25) in Längsrichtung überlappt.

15. Einhausung nach Anspruch 14, **dadurch gekennzeichnet, dass** das Zwischenpaneel (45) mit einer Wasserrinne (46) ausgestattet ist.

## Claims

1. An enclosure for a nacelle (14) of a wind turbine, in which a panel (22, 27) is connected to a substructure (31, 32), having an imaginary straight line (36), which extends over the panel (22, 27) and is aligned with an edge (37) of the panel (22, 27), wherein the imaginary straight line (36) defines a first sub-portion (40) of the panel (22, 27), said first sub-portion comprising the edge (37), and wherein the first sub-portion (40) butts against the substructure (31, 32), wherein the first sub-portion (40) is retained against the substructure (31, 32) by a tension element (35) acting in a direction of tension, and wherein the first sub-portion (40) can be displaced relative to the substructure (31, 32) in a direction which intersects the direction of tension, **characterized in that** a displacement of the first sub-portion (40) relative to the substructure (31, 32) has an effect on the direction of tension of the tension element (35).

2. The enclosure as claimed in claim 1, wherein a second sub-portion (41) of the panel (22, 27), said second sub-portion being arranged on the other side of the imaginary straight line (36), is connected to the substructure (31, 32) via fixed bearings (33).

3. The enclosure as claimed in claim 2, wherein, in the second sub-portion (41), the panel (22, 27) comprises a plurality of bores which extend along an edge of the panel (22, 27) and via which the panel (22, 27) is connected to the substructure (31, 32).

4. The enclosure as claimed in one of claims 1 to 3, wherein the tension element (35) extends between the first sub-portion (40) of the panel (22, 27) and an anchoring point of the substructure (31, 32).

5. The enclosure as claimed in one of claims 1 to 4, wherein the panel is a side panel (22, 27) of the enclosure (17).

6. The enclosure as claimed in claim 5, wherein the first sub-portion (40) forms the lower portion of the side panel (22, 27).

7. The enclosure as claimed in claim 5 or 6, wherein a roof panel (20, 25) adjoins the side panel (22, 27), wherein, rather than being connected to one another directly, the roof panel (20, 25) and the side panel (22, 27) are connected to one another only via the substructure (31, 32).

8. The enclosure as claimed in one of claims 5 to 7, wherein, at its rear end, the roof panel (20, 25) is retained by a tension device (29), which exerts tension in the forward direction.

9. The enclosure as claimed in claim 8, wherein the tension device (29) comprises a receptor of a lightning rod.

10. The enclosure as claimed in one of claims 5 to 9, wherein a floor panel (26) adjoins the side panel (22, 27), and wherein the first sub-portion (40) of the side panel (22, 27) can be displaced relative to the floor panel (26) in the longitudinal direction.

11. The enclosure as claimed in one of claims 5 to 10, which comprises a first side panel (22) and a second side panel (27), which are arranged one behind the other and can be displaced relative to one another in the longitudinal direction.

12. The enclosure as claimed in claim 11, wherein the first side panel (22) is connected to a first portion (31) of the substructure, and wherein the second side panel (27) is connected to a second portion (32) of the substructure, it being possible for the side panels (27) to be displaced relative to one another, the substructure (31, 32) being subjected to elastic deformation in the process.

13. The enclosure as claimed in one of claims 1 to 12, which comprises a first roof panel (20) and a second roof panel (25), wherein the first roof panel (20) is connected to a first portion (31) of the substructure, wherein the second roof panel (25) is connected to a second portion (32) of the substructure, and wherein the roof panels (20, 25) can be displaced relative to one another, the substructure (31, 32) being subjected to elastic deformation in the process.

14. The enclosure as claimed in one of claims 1 to 13, which comprises an intermediate panel (45), which is arranged between a first roof panel (20) and a second roof panel (25) and overlaps with the first roof panel (20) and the second roof panel (25) in the longitudinal direction.

15. The enclosure as claimed in claim 14, wherein the intermediate panel (45) is equipped with a water channel (46).

## Revendications

1. Enceinte pour une nacelle (14) d'une installation d'énergie éolienne, dans laquelle un panneau (22, 27) est relié à une sous-construction (31, 32), avec une droite imaginaire (36) qui s'étend sur le panneau (22, 27) et qui est orientée vers un bord (37) du panneau (22, 27), 27), la droite imaginaire (36) définissant une première section partielle (40) du panneau (22, 27) comprenant le bord (37) et la première section partielle (40) étant appliquée sur la sous-construction (31, 32), la première section partielle (40) étant maintenue contre la sous-construction (31, 32) par un élément de traction (35) agissant dans une direction de traction et la première section partielle (40) pouvant être déplacée par rapport à la sous-construction (31, 32) dans une direction coupant la direction de traction, **caractérisée en ce qu'**un déplacement de la première section partielle (40) par rapport à la sous-construction (31, 32) se répercute sur la direction de traction de l'élément de traction (35) .

2. Enceinte selon la revendication 1, **caractérisée en ce qu'**une deuxième section partielle (41) du panneau (22, 27), qui est agencée de l'autre côté de la droite imaginaire (36), est reliée à la sous-construction (31, 32) par l'intermédiaire de paliers fixes (33).

3. Enceinte selon la revendication 2, **caractérisée en ce que** le panneau (22, 27) comprend, dans la deuxième section partielle (41), une pluralité d'alésages qui s'étendent le long d'un bord du panneau (22, 27) et par l'intermédiaire desquels le panneau (22, 27) est relié à la sous-construction (31, 32).

4. Enceinte selon l'une quelconque des revendications 1 à 3, **caractérisée en ce que** l'élément de traction (35) s'étend entre la première section partielle (40) du panneau (22, 27) et un point d'ancrage de la sous-construction (31, 32).

5. Enceinte selon l'une quelconque des revendications 1 à 4, **caractérisée en ce que** le panneau est un panneau latéral (22, 27) de l'enceinte (17).

6. Enceinte selon la revendication 5, **caractérisée en ce que** la première section partielle (40) forme la section inférieure du panneau latéral (22, 27).

7. Enceinte selon la revendication 5 ou 6, **caractérisée en ce qu'**un panneau de toit (20, 25) est contigu au panneau latéral (22, 27), le panneau de toit (20, 25) et le panneau latéral (22, 27) n'étant pas directement reliés l'un à l'autre, mais uniquement par l'intermédiaire de la sous-construction (31, 32).

8. Enceinte selon l'une quelconque des revendications 5 à 7, **caractérisée en ce que** le panneau de toit (20, 25) est maintenu à son extrémité arrière par un dispositif de traction (29) qui exerce une traction vers l'avant.

9. Enceinte selon la revendication 8, **caractérisée en ce que** le dispositif de traction (29) comprend un récepteur d'un paratonnerre.

10. Enceinte selon l'une quelconque des revendications 5 à 9, **caractérisée en ce qu'**un panneau de fond (26) est contigu au panneau latéral (22, 27) et **en ce que** la première section partielle (40) du panneau latéral (22, 27) peut être déplacée dans la direction longitudinale par rapport au panneau de fond (26).

11. Enceinte selon l'une quelconque des revendications 5 à 10, **caractérisée par** un premier panneau latéral (22) et un deuxième panneau latéral (27) qui sont agencés l'un derrière l'autre dans la direction longitudinale et qui peuvent être déplacés l'un par rapport à l'autre dans la direction longitudinale.

12. Enceinte selon la revendication 11, **caractérisée en ce que** le premier panneau latéral (22) est relié à une première section (31) de la sous-construction, **en ce que** le deuxième panneau latéral (27) est relié à une deuxième section (32) de la sous-construction, les pouvant être déplacés l'un par rapport à l'autre avec une déformation élastique de la sous-construction (31, 32).

13. Enceinte selon l'une quelconque des revendications 1 à 12, **caractérisée par** un premier panneau de toit (20) et un deuxième panneau de toit (25), le premier panneau de toit (20) étant relié à une première section (31) de la sous-construction, le deuxième panneau de toit (25) étant relié à une deuxième section (32) de la sous-construction, et les panneaux de toit (20, 25) pouvant être déplacés l'un par rapport à l'autre avec une déformation élastique de la sous-construction (31, 32).

14. Enceinte selon l'une quelconque des revendications 1 à 13, **caractérisée par** un panneau intermédiaire (45) agencé entre un premier panneau de toit (20) et un deuxième panneau de toit (25), qui chevauche dans la direction longitudinale le premier panneau de toit (20) et le deuxième panneau de toit (25).

15. Enceinte selon la revendication 14, **caractérisée en ce que** le panneau intermédiaire (45) est équipé d'une gouttière (46).
